# EUROPEAN PATENT APPLICATION

(11) **EP 4 841 872 A1**
(43) Date of publication of application: **18.11.2026**
(21) Application number: 26171881.1
(22) Date of filing: 13.04.2026
(51) Int. Cl.: H02M 1/00, H02J 7/02, H02M 3/00, H02M 3/335

(54) **HYBRID MODE CONTROL METHOD FOR CONTROLLING A THREE-PHASE RESONANT CONVERSION CIRCUIT**

(30) Priority: 14.05.2025 CN 202510617906
(71) Applicant: DELTA ELECTRONICS, INC., Taoyuan City 320023 (TW)
(72) Inventor: WANG, Ching, 320023 Chungli Dist., Taoyuan City (TW)
(74) Representative: 2K Patent Partnerschaft mbB

(57) **Abstract**

A hybrid mode control method includes steps of: converting a two-phase burst mode into a first PFM mode as loading increases when an output voltage is less than an output voltage boundary (HVDC_boundary) and an output power is less than a first output power boundary (Po_boundary1); converting the first PFM mode into a second PFM mode as loading continuously increases when the output power is greater than the first output power boundary (Po_boundary1); converting the two-phase burst mode into the first PFM mode as loading increases when the output voltage is greater than the output voltage boundary (HVDC_boundary) and the output power is less than a second output power boundary (Po_boundary2); converting the first PFM mode into the second PFM mode as loading continuously increases when the output power is greater than the second output power boundary (Po_boundary2).

## Description

### BACKGROUND

### Technical Field

The present disclosure relates to a hybrid mode control method, and more particularly to a hybrid mode control method for wide-range voltage operations of a three-phase resonant conversion circuit.

### Description of Related Art

The statements in this section merely provide background information related to the present disclosure and do not necessarily constitute prior art.

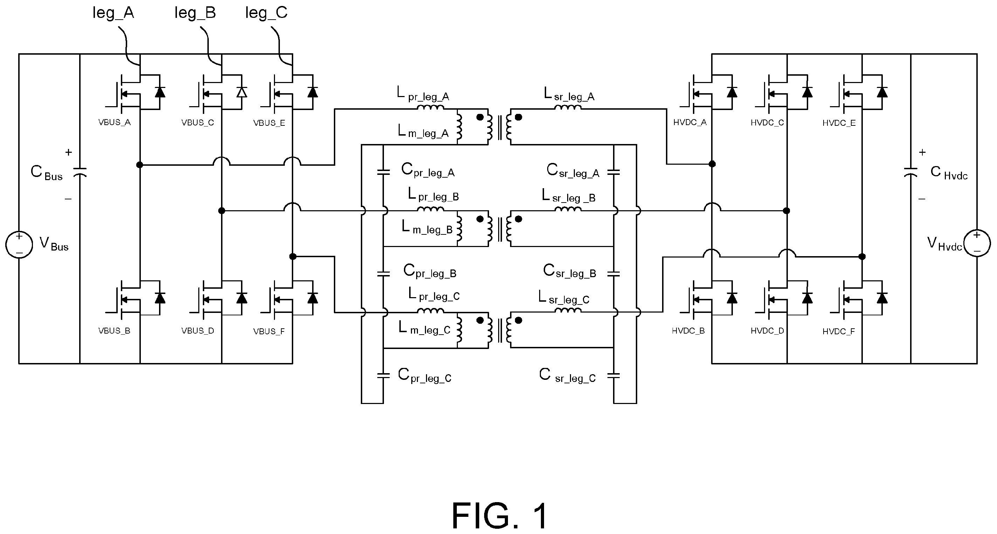

With the rise of awareness of environmental protection and green energy, the sales volume of electric vehicles has doubled and the demand for charging stations has increased. The LLC resonant converter is often used in charger applications for the electric vehicles, and the LLC resonant converter shown in FIG. 1 is an example. For the forward charging (that is, the external power supply charges the battery of the electric vehicle), the input side is the VBUS side (the input voltage is V_{Bus}), and the output side is the HVDC side (the output voltage is V_{Hvdc}). Since the voltage of the battery is very different when the battery is fully charged and when the battery is low, the range of the battery voltage (i.e., the output voltage) varies widely. For the reverse discharging (that is, the battery of the electric vehicle is discharged to the outside), the input side is the HVDC side (the input voltage is V_{Hvdc}), and the output side is the VBUS side (the output voltage is V_{Bus}), and the range of the input voltage varies widely.

There are two main problems encountered in hardware designs of the current LLC resonant converter:
1. The range of the burst mode is too large. As shown in FIG. 1, since the range of the battery voltage as the input voltage (discharging mode, namely DCHG mode) or output voltage (charging mode, namely CHG mode) is too wide, it will lead to the design of the interval size of the burst mode will be too large.
2. In the discharging mode (DCHG), the voltage required by the inverter cannot be supplied. Under the reverse discharging operation, the voltage provided to the VBUS side is as high as 400 volts. In order to be compatible with the bidirectional operation at the same time, the voltage required by the inverter cannot be supplied. The inverter is the power factor corrector (AC to DC converter) coupled to the VBUS side in the charging operation, and it is the inverter (DC to AC converter) in the discharging operation.

In the charging mode, the current control method will change from the PFM mode to the burst mode since the voltage gain is still too high when the HVDC side is at low voltage, thereby causing the output voltage ripple to be too large (the duty cycle is fixed at 50%). However, depending on the design of the hardware resonant tank, when the HVDC side is at low voltage, a larger current will be required to leave the burst mode and return to the PFM mode. For example, it usually takes 220 volts, 8 amps to level the burst mode and return to the PFM mode.

For the insufficient voltage on the HVDC side in the discharging mode, according to the proposed delay time control, the voltage gain may be increased by shifting the switching signal on the output side to make the transformer to be short-circuit so that the resonant energy is forced to increase, thereby increasing the voltage gain. However, the phase shift of the current delay control method is based on the relationship between the output voltage and the input voltage, which is first established in a look-up table. Since this is an open-loop table lookup method, it is necessary to carefully confirm each input and output condition before it can be designed, which increases the complexity of the software and the uncertainty of many conditions.

Therefore, how to design a hybrid mode control method to solve the problems and technical bottlenecks in the existing technology has become a critical topic in this field.

### SUMMARY

An objective of the present disclosure is to provide a hybrid mode control method for controlling a three-phase resonant conversion circuit. The three-phase resonant conversion circuit includes three resonant tanks with electrical isolation. The three resonant tanks are respectively connected to three input switch bridge arms and three output switch bridge arms. The hybrid mode control method includes steps of: converting a two-phase burst mode of the three-phase resonant conversion circuit into a first PFM (pulse frequency modulation) mode as loading of the three-phase resonant conversion circuit increases when an output voltage of the three-phase resonant conversion circuit is less than an output voltage boundary and an output power of the three-phase resonant conversion circuit is less than a first output power boundary, wherein the first PFM mode controls any two resonant tanks and two corresponding input switch bridge arms and two corresponding output switch bridge arms; converting the first PFM mode into a second PFM mode as the loading continuously increases when the output power is greater than the first output power boundary, wherein the second PFM mode is to control the three resonant tanks and the three corresponding input switch bridge arms and the three corresponding output switch bridge arms; converting the two-phase burst mode into the first PFM mode as the loading increases when the output voltage is greater than the output voltage boundary and the output power is less than a second output power boundary, wherein the first output power boundary is greater than the second output power boundary; converting the first PFM mode into the second PFM mode as the loading continuously increases when the output power is greater than the second output power boundary.

In one embodiment, the hybrid mode control method further includes: converting the second PFM mode into a PSM (phase shift modulation) mode as the loading continuously increases when the output voltage is greater than the output voltage boundary and the output power is greater than the first output power boundary.

In one embodiment, the hybrid mode control method further includes: maintaining the first PFM mode as the output voltage increases from below the output voltage boundary to above the output voltage boundary when the output power is less than the second output power boundary and greater than a minimum output power.

In one embodiment, the hybrid mode control method further includes: converting the first PFM mode into the second PFM mode as the output voltage increases from below the output voltage boundary to above the output voltage boundary when the output power is less than the first output power boundary and greater than the second output power boundary.

In one embodiment, the hybrid mode control method further includes: converting the second PFM mode into a PSM mode as the output voltage increases from below the output voltage boundary to above the output voltage boundary when the output power is greater than the first output power boundary and less than a maximum output power.

In one embodiment, the hybrid mode control method further includes: maintaining the two-phase burst mode when the output power is less than a maximum output power.

In one embodiment, the hybrid mode control method further includes steps of: disabling any one of the three input switch bridge arms and setting duty cycles of switches of the disabled input switch bridge arm to zero; setting duty cycles of switches of one of the remaining two input switch bridge arms to be fixed; setting phase shifts of switches of the other of the remaining two input switch bridge arms from 120 degrees to 180 degrees.

In one embodiment, the hybrid mode control method further includes steps of: disabling any one of the three input switch bridge arms and setting duty cycles of switches of the disabled input switch bridge arm to zero in a step-by-step manner; setting phase shifts of switches of the other of the remaining two input switch bridge arms from 120 degrees to 180 degrees in a step-by-step manner.

In one embodiment, the hybrid mode control method further includes steps of: enabling an input switch bridge arm which was originally disabled and increasing duty cycles of switches of the enabled input switch bridge arm from zero to an operable value; setting duty cycles of switches of one of the remaining two input switch bridge arms to be fixed; setting phase shifts of switches of the other of the remaining two input switch bridge arms from 180 degrees to 120 degrees.

In one embodiment, the hybrid mode control method further includes steps of: enabling an input switch bridge arm which was originally disabled and increasing duty cycles of switches of the enabled input switch bridge arm from zero to an operable value in a step-by-step manner; setting phase shifts of switches of the other of the remaining two input switch bridge arms from 180 degrees to 120 degrees in a step-by-step manner.

In one embodiment, in the first PFM mode or in the second PFM mode, a duty cycle is fixed at 50%, and a frequency is variable between a maximum frequency and a minimum frequency.

In one embodiment, in the PSM mode, a duty cycle is fixed at 50%, a frequency is fixed at a minimum frequency, and a phase shift is variable between 0% and a maximum value.

In one embodiment, in the two-phase burst mode, a duty cycle is fixed at 50%, and a frequency is fixed at the maximum frequency.

Accordingly, the present disclosure has the following features and advantages. The hybrid mode control method proposed by the present disclosure is used for a three-phase resonant conversion circuit under a wide range of voltage operation. If the output of a sufficient wattage is not required, two-phase operation mode can be used. On the contrary, if more power is required, the two-phase operation mode is converted into the three-phase operation mode, thereby maintaining the normal operation of the resonant conversion circuit under the corresponding power requirement.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a circuit structure of a three-phase resonant conversion circuit according to the present disclosure.
FIG. 2 is a schematic diagram of an existing operation mode of the three-phase resonant conversion circuit according to the present disclosure.
FIG. 3 is a schematic diagram of an operation mode of the three-phase resonant conversion circuit according to the present disclosure.
FIG. 4 is a schematic circuit diagram of the three-phase resonant conversion circuit operating in two-phase control according to the present disclosure.
FIG. 5 is a schematic waveform diagram of the three-phase resonant conversion circuit operating in three-phase control according to the present disclosure.
FIG. 6 is a schematic waveform diagram of the three-phase resonant conversion circuit operating in two-phase control according to the present disclosure.
FIG. 7 is a schematic waveform diagram of the three-phase resonant conversion circuit operating in three-phase converting to two-phase control according to the present disclosure.
FIG. 8 is a schematic diagram of smooth conversions in phase shift and duty cycle according to the present disclosure.
FIG. 9 is a schematic waveform diagram of the three-phase resonant conversion circuit operating in delay control on synchronous rectification side according to the present disclosure.
FIG. 10 is a schematic diagram of the condition points for converting between three-phase operation and two-phase operation of the three-phase resonant conversion circuit according to the present disclosure.
FIG. 11 is a flowchart of a hybrid mode control method according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

Please refer to FIG. 1, which shows a circuit structure of a three-phase resonant conversion circuit according to the present disclosure. In the present disclosure, the circuit structure is operating in an application of bi-directional vehicle charger. The load on the secondary side of this circuit structure is usually a battery, and active switches are provided on both the primary side and the secondary side, for example, the primary side provides active switches VBUS_A to VBUS_F, and the secondary side provides active switches HVDC_A to HVDC_F. According to the requirements of the occasion, it is decided to use forward charging (hereinafter referred to as charging or charging operation or charging mode (CHG mode)) or reverse discharging (hereinafter referred to as discharging or discharging operation or discharging mode (DCHG mode)).

For the charging operation, the input side is the VBUS side, and its voltage fluctuation rate is generally low (it may be regarded as a fixed input voltage VBUS). If it is a single-phase system, the input voltage may be, for example but not limited to, 400 volts. Also, the output side is the HVDC side, and it is usually a battery. The voltage of the battery varies in a wide range due to different usage conditions, such as but not limited to 220 to 430 volts. Therefore, for the charging operation, when the output voltage is lower than the input voltage (for example, the input voltage is 400 volts and the output voltage is 220 volts), the LLC resonant converter charges the battery in a step-down manner; when the output voltage is greater than the input voltage (for example, the input voltage is 400 volts and the output voltage is 430 volts), the LLC resonant converter charges the battery in a step-up manner.

For the discharging operation (the direction of its power flow is opposite to that of the charging operation), the input side is the HVDC side, and the output side is the VBUS side. In this condition, the output voltage will be fixed at 400 volts, and the input voltage will vary widely, such as but not limited to 220 to 430 volts. Therefore, for the discharging operation, when the input voltage is lower than the output voltage (for example, the input voltage is 220 volts and the output voltage is 400 volts), the LLC resonant converter charges the battery in a step-up manner; when the input voltage is greater than the output voltage (for example, the input voltage is 430 volts and the output voltage is 400 volts), the LLC resonant converter charges the battery in a step-down manner.

In the charging mode (CHG mode), the controller acquires the voltage Vo and current Io at the battery side, and selects the smaller control value from two control loops (including a voltage control loop and a current control loop) to calculate. After calculation, PWM signals are outputted to control primary-side switches and secondary-side switches. In the discharging mode (DCHG mode), since only VBUS needs to be controlled, it is a single control loop (i.e., the voltage control loop). Incidentally, the primary side and the secondary side mentioned have different definitions according to different power flows in the charging mode and the discharging mode. In other words, for the charging mode, the VBUS side is the primary side, and the HVDC side is the secondary side; conversely, for the discharging mode, the HVDC side is the primary side, and the VBUS side is the secondary side.

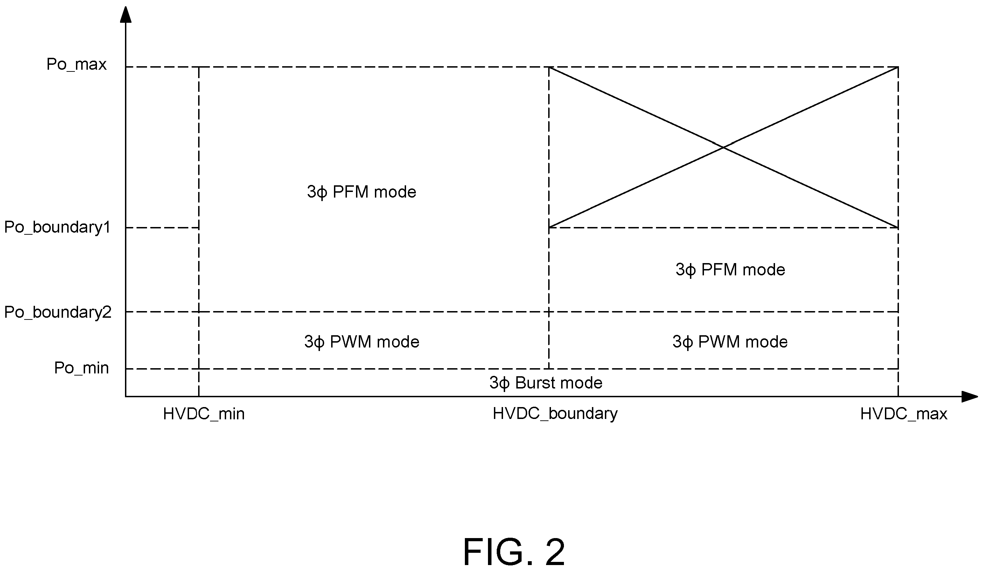

Please refer to FIG. 2, which shows a schematic diagram of an existing operation mode of the three-phase resonant conversion circuit according to the present disclosure. The current operation method is to use a three-phase pulse width modulation mode (3ϕ PWM mode) in conjunction with a three-phase burst mode (3ϕ Burst mode). Under a fixed maximum frequency, the duty cycle is changed from the maximum duty cycle (50%) to the minimum duty cycle to solve the problem of excessive ripple caused by the three-phase burst mode (3ϕ Burst mode) at light load. However, the use of the three-phase pulse width modulation mode (3ϕ PWM mode) may cause the converter to lose its soft-switching property, resulting in lower efficiency. In addition, referring to FIG. 2, in the first quadrant (maximum output voltage HVDC_max and maximum output power Po_max), the specified voltage and wattage may not be reached due to insufficient voltage gain. Incidentally, if the wide-range output voltage is within the operating region of 220V (minimum output voltage HVDC_min) to 430V (maximum output voltage HVDC_max), the output voltage boundary (HVDC_boundary) may be set to 350V. However, the output voltage boundary (HVDC_boundary) may have different designs and specifications depending on the voltage range of each battery.

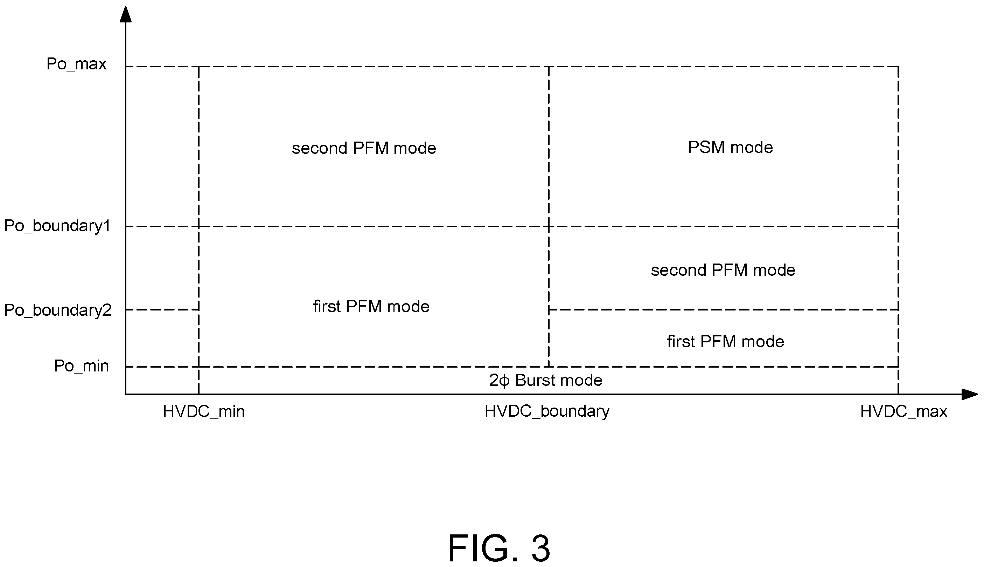

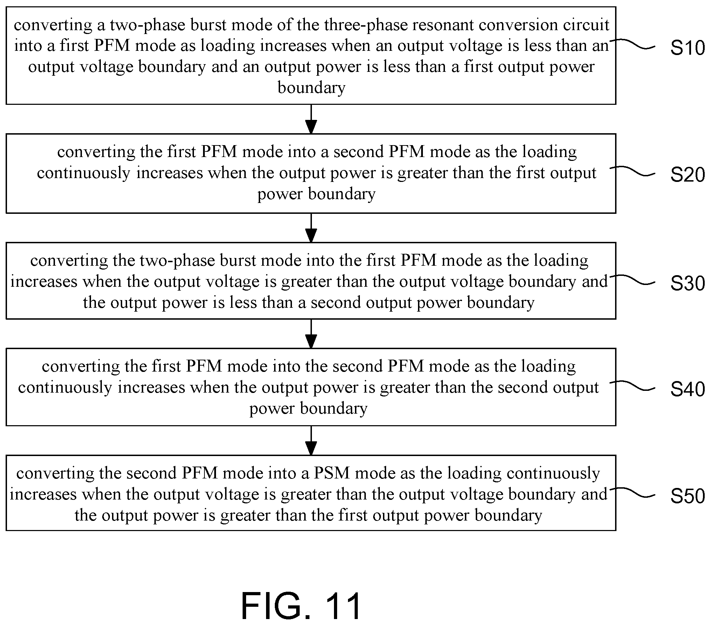

Please refer to FIG. 11, which shows a flowchart of a hybrid mode control method according to the present disclosure. Also referring to FIG. 3, which shows a schematic diagram of an operation mode of the three-phase resonant conversion circuit according to the present disclosure. The hybrid mode control method of the present disclosure is used to control a three-phase resonant conversion circuit, wherein the three-phase resonant conversion circuit includes three resonant tanks with electrical isolation. The three resonant tanks are respectively connected to three input switch bridge arms (legA to legC) and three output switch bridge arms, and the switch bridge arms are interleaved, as shown in the structure diagram of FIG. 1.

As shown in FIG. 11 and FIG. 3, the hybrid mode control method includes steps of: converting a two-phase burst mode (2ϕ Burst mode) of the three-phase resonant conversion circuit into a first PFM mode (2ϕ PFM mode) (step S10) as loading of the three-phase resonant conversion circuit increases when an output voltage of the three-phase resonant conversion circuit is less than an output voltage boundary (HVDC_boundary) and an output power of the three-phase resonant conversion circuit is less than a first output power boundary (Po_boundary1). In particular, the first PFM mode (2ϕ PFM mode), i.e., two-phase pulse frequency modulation mode, is to control any two resonant tanks and two corresponding input switch bridge arms and two corresponding output switch bridge arms. The specific operation of 2ϕ PFM mode will be described in detail later. In particular, when operating in the first PFM mode (2ϕ PFM mode), the duty cycle is fixed at 50%, and the variable frequency is between the maximum frequency and the lowest frequency. Incidentally, the so-called conversion from the two-phase burst mode to the first PFM mode means controlling the three-phase resonant conversion circuit to convert operations from the two-phase burst mode to the first PFM mode. The meaning of "conversion" below is the same or similar and will not be repeated here.

Furthermore, maintaining the two-phase burst mode (2ϕ Burst mode) when the output power of the three-phase resonant conversion circuit is less than a minimum output power (Po_min). Furthermore, converting the first PFM mode (2ϕ PFM mode) into a second PFM mode (3ϕ PFM mode) (step S20) as the loading continuously increases when the output power of the three-phase resonant conversion circuit is greater than the first output power boundary (Po_boundaryl). In particular, the second PFM mode (3ϕ PFM mode), i.e., three-phase pulse frequency modulation mode, is to control the three resonant tanks and the three corresponding input switch bridge arms and the three corresponding output switch bridge arms. In particular, when operating in the second PFM mode (3ϕ PFM mode), the duty cycle is fixed at 50%, and the variable frequency is between the maximum frequency and the minimum frequency.

In summary, when the output voltage of the three-phase resonant conversion circuit is lower than the output voltage boundary (HVDC_boundary) and the output power of the three-phase resonant conversion circuit is lower than the minimum output power (Po_min), the three-phase resonant conversion circuit operates in the two-phase burst mode (2ϕ Burst mode). As the loading of the three-phase resonant conversion circuit continuously increases, when the output power of the three-phase resonant conversion circuit is between the minimum output power (Po_min) and the first output power boundary (Po_boundary1), the three-phase resonant conversion circuit operates in the first PFM mode (2ϕ PFM mode). As the loading of the three-phase resonant conversion circuit continuously increases, when the output power of the three-phase resonant conversion circuit is between the first output power boundary (Po_boundary1) and the maximum output power (Po_max), the three-phase resonant conversion circuit operates in the second PFM mode (3ϕ PFM mode). It can be realized that when the loading of the three-phase resonant conversion circuit increases, the three-phase resonant conversion circuit will operate from the two-phase burst mode (2ϕ Burst mode) to the first PFM mode (2ϕ PFM mode), and then to the second PFM mode (3ϕ PFM mode).

Furthermore, converting the two-phase burst mode (2ϕ Burst mode) into the first PFM mode (2ϕ PFM mode) (step S30) as the loading of the three-phase resonant conversion circuit increases when the output voltage of the three-phase resonant conversion circuit is greater than the output voltage boundary (HVDC_boundary) and the output power of the three-phase resonant conversion circuit is less than a second output power boundary (Po_boundary2). In particular, the first output power boundary (Po_boundary1) is greater than the second output power boundary (Po boundary2).

Furthermore, converting the first PFM mode (2ϕ PFM mode) into the second PFM mode (3ϕ PFM mode) (step S40) as the loading of the three-phase resonant conversion circuit continuously increases when the output power of the three-phase resonant conversion circuit is greater than the second output power boundary (Po_boundary2).

Furthermore, converting the second PFM mode (3ϕ PFM mode) into a PSM mode as the loading of the three-phase resonant conversion circuit continuously increases when the output voltage of the three-phase resonant conversion circuit is greater than the output voltage boundary (HVDC_boundary) and the output power of the three-phase resonant conversion circuit is greater than the first output power boundary (Po_boundary1) (step S50). In particular, the PFM (pulse frequency modulation) mode is a frequency variation control, and the PSM (phase shift modulation) mode is a delay time control.

In summary, when the output voltage of the three-phase resonant conversion circuit is higher than the output voltage boundary (HVDC_boundary) and the output power of the three-phase resonant conversion circuit is lower than the minimum output power (Po_min), the three-phase resonant conversion circuit operates in the two-phase burst mode (2ϕ Burst mode). In particular, when operating in the two-phase burst mode (2φ Burst mode), the duty cycle is fixed at 50%, and the frequency is fixed at the maximum frequency. As the loading of the three-phase resonant conversion circuit continuously increases, when the output power of the three-phase resonant conversion circuit is between the minimum output power (Po_min) and the second output power boundary (Po_boundary2), the three-phase resonant conversion circuit operates in the first PFM mode (2ϕ PFM mode). As the loading of the three-phase resonant conversion circuit continuously increases, when the output power of the three-phase resonant conversion circuit is between the second output power boundary (Po_boundary2) and the first output power boundary (Po_boundary1), the three-phase resonant conversion circuit operates in the second PFM mode (3ϕ PFM mode). As the loading of the three-phase resonant conversion circuit continuously increases, when the output power of the three-phase resonant conversion circuit is between the first output power boundary (Po_boundary1) and the maximum output power (Po_max), the three-phase resonant conversion circuit operates in the PSM mode. It can be realized that when the loading of the three-phase resonant conversion circuit increases, the three-phase resonant conversion circuit will operate from the two-phase burst mode (2ϕ Burst mode) to the first PFM mode (2ϕ PFM mode), and to the second PFM mode (3ϕ PFM mode), and finally to the PSM mode.

Furthermore, maintaining the first PFM mode (2ϕ PFM mode) as the output voltage of the three-phase resonant conversion circuit increases from below the output voltage boundary (HVDC_boundary) to above the output voltage boundary (HVDC_boundary) when the output power of the three-phase resonant conversion circuit is less than the second output power boundary (Po_boundary2) and greater than a minimum output power (Po_min).

Furthermore, converting the first PFM mode (2ϕ PFM mode) into the second PFM mode (3ϕ PFM mode) as the output voltage of the three-phase resonant conversion circuit increases from below the output voltage boundary (HVDC_boundary) to above the output voltage boundary (HVDC_boundary) when the output power of the three-phase resonant conversion circuit is less than the first output power boundary (Po_boundary1) and greater than the second output power boundary (Po boundary2).

Furthermore, converting the second PFM mode (3ϕ PFM mode) into a PSM mode as the output voltage of the three-phase resonant conversion circuit increases from below the output voltage boundary (HVDC_boundary) to above the output voltage boundary (HVDC_boundary) when the output power of the three-phase resonant conversion circuit is greater than the first output power boundary (Po_boundary1) and less than a maximum output power (Po_max). In particular, when operating in the PSM mode, the duty cycle is fixed at 50%, the frequency is fixed at the minimum frequency, and the variable phase shift is between 0% and the maximum value. In the PSM mode, the duty cycle and frequency are fixed on the synchronous rectification side to increase the voltage conversion ratio. The convenience of adjusting parameters can be achieved by simply determining the minimum frequency and limiting the maximum phase shift. Specifically, in the discharging operation, when the load becomes heavier, the input voltage is insufficient, and the stable output voltage cannot be provided, the delay time may be controlled by shifting the switching signal on the secondary side (that is, the VBUS side) to make the transformer to be short-circuit so that the resonant energy is forced to increase, thereby increasing the voltage gain and maintaining stability of the output voltage. Accordingly, through the phase-shift modulation mode control of delay control under the closed loop and low frequency, it can solve the problem that cannot be achieved by only PFM mode operation only higher voltage gain is required at higher output voltage or heavier loading.

Incidentally, the hybrid mode control method of the present disclosure includes two-phase mode operations: two-phase burst mode (2ϕ Burst mode) and two-phase pulse frequency modulation mode (2ϕ PFM mode); and three-phase mode operations: three-phase burst mode (3ϕ Burst mode), three-phase pulse frequency modulation mode (3ϕ PFM mode), and phase shift modulation mode (PSM mode).

Therefore, according to the distribution of the working region in FIG. 3, the purpose can be achieved by converting between three-phase operation or two-phase operation by taking advantage of the structure of the multi-phase circuit. For example, in the third quadrant, the current three-phase pulse frequency modulation can be replaced by two-phase operation to achieve better efficiency. In the second quadrant, the three-phase operation can be converted back to make up for the insufficient energy. In the first quadrant, the phase shift modulation with delay control is used to achieve conditions that cannot be met by existing technologies.

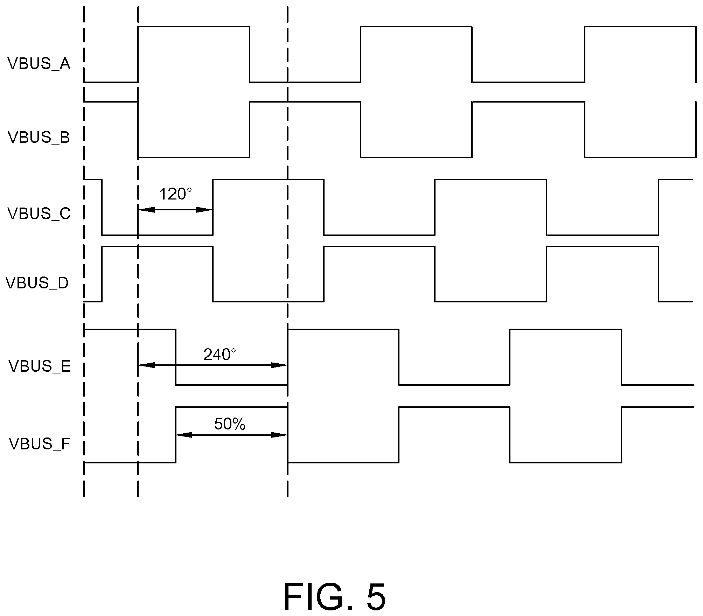

Please refer to FIG. 5, which shows a schematic waveform diagram of the three-phase resonant conversion circuit operating in three-phase control according to the present disclosure. As shown in FIG. 5, VBUS_A to VBUS_F are control signals for controlling the primary-side switches of the three-phase resonant conversion circuit. As can be seen from FIG. 5, the control signals VBUS_A, VBUS_B of controlling the upper-arm switch and the lower-arm switch of the first switch bridge arm legA are complementary (opposite) signals. For example, when the control signal VBUS_A is high-level, the control signal VBUS_B is low-level; when the control signal VBUS_A is low-level, the control signal VBUS_B is high-level, and it is assumed that the duty cycle of the control signal is 50%. Similarly, the control signals VBUS_C, VBUS_D of controlling the upper-arm switch and the lower-arm switch of the second switch bridge arm legB are complementary (opposite) signals. Similarly, the control signals VBUS_E, VBUS_F of controlling the upper-arm switch and the lower-arm switch of the third switch bridge arm legC are complementary (opposite) signals. Furthermore, since the three switch bridge arms legA-legC have a phase difference of 120 degrees, the control signal VBUS_C lags the control signal VBUS_A by 120 degrees. Similarly, the control signal VBUS_E lags the control signal VBUS_C by 120 degrees.

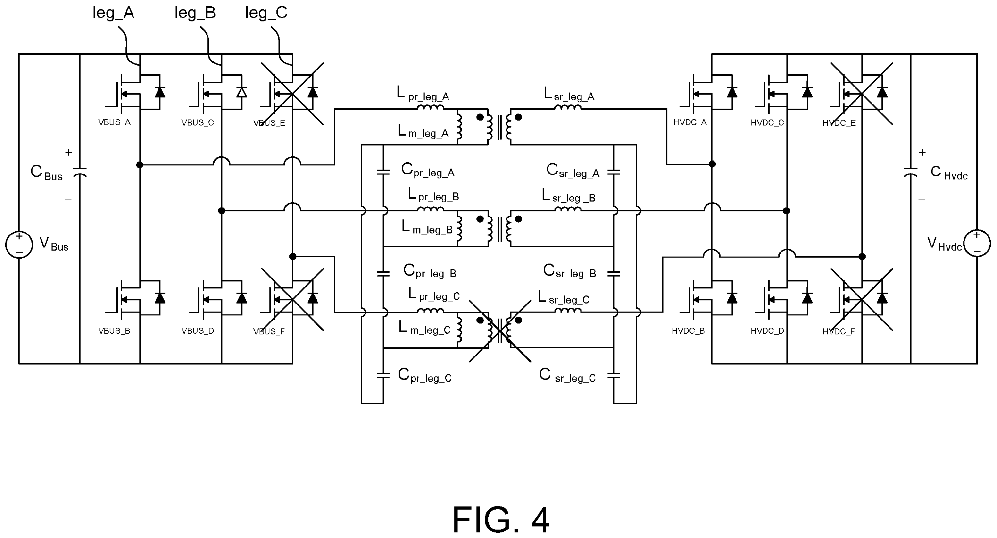

Please refer to FIG. 4, which shows a schematic circuit diagram of the three-phase resonant conversion circuit operating in two-phase control according to the present disclosure. As shown in FIG. 4, the two working phases are input switch bridge arms legA, legB (input switch bridge arm legC is disabled or not controlled), and the corresponding two-phase output switch bridge arms and two-phase resonant tanks to achieve two-phase control. Incidentally, FIG. 4 is for illustration purposes only and is not intended to limit the present disclosure, that is, the two working phases may be the input switch bridge arms legA, legC, and the corresponding two-phase output switch bridge arms and two-phase resonant tanks, or the two working phases may be the input switch bridge arms legB, legC, and the corresponding two-phase output switch bridge arms and two-phase resonant tanks.

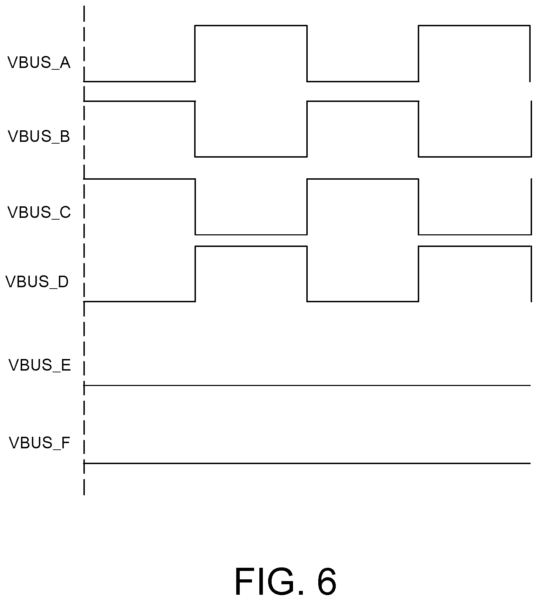

Please refer to FIG. 6, which shows a schematic waveform diagram of the three-phase resonant conversion circuit operating in two-phase control according to the present disclosure. Compared with the control waveform of the three-phase control shown in FIG. 5, FIG. 6 illustrates the control waveform of any two-phase control, and it is assumed that only the input switch bridge arms legA, legB are controlled, while the input switch bridge arm legC is disabled or not controlled. Therefore, correspondingly, the control signals VBUS_E, VBUS_F of the upper-arm switch and the lower-arm switch of the input switch bridge arm legC are set to be low-level signals that are always turned off. Only the control signals VBUS_A, VBUS_B of the upper-arm switch and the lower-arm switch of the first switch bridge arm legA and the control signals VBUS_C, VBUS_D of the upper-arm switch and the lower-arm switch of the second switch bridge arm legB are retained. The control signals VBUS_A, VBUS_B of the upper-arm switch and the lower-arm switch of the first switch bridge arm legA are complementary (opposite) signals, and it is assumed that the duty cycle of the control signal is 50%. Furthermore, the control signal VBUS_C lags the control signal VBUS_A by 180 degrees.

As mentioned above, the two working phases may be the input switch bridge arms legA, legC, and the corresponding two-phase output switch bridge arms and two-phase resonant tanks, and therefore the control signals VBUS_C, VBUS_D of the upper-arm switch and the lower-arm switch of the input switch bridge arm legB are set to be low-level signals that are always turned off. Alternatively, the two working phases may be the input switch bridge arms legB, legC, and the corresponding two-phase output switch bridge arms and two-phase resonant tanks, and therefore the control signals VBUS_A, VBUS_B of the upper-arm switch and the lower-arm switch of the input switch bridge arm legA are set to be low-level signals that are always turned off.

In summary, the present disclosure provides three-phase and two-phase operations, and there is switching between three-phase and two-phase. In terms of actual circuit characteristics and operations, directly converting three-phase to two-phase or directly converting two-phase to three-phase may cause malfunctions such as overshoot or undershoot. Therefore, the following will further explain the reasonable operation of converting three-phase to two-phase, that is, there is a buffering process in the operation of converting three-phase to two-phase.

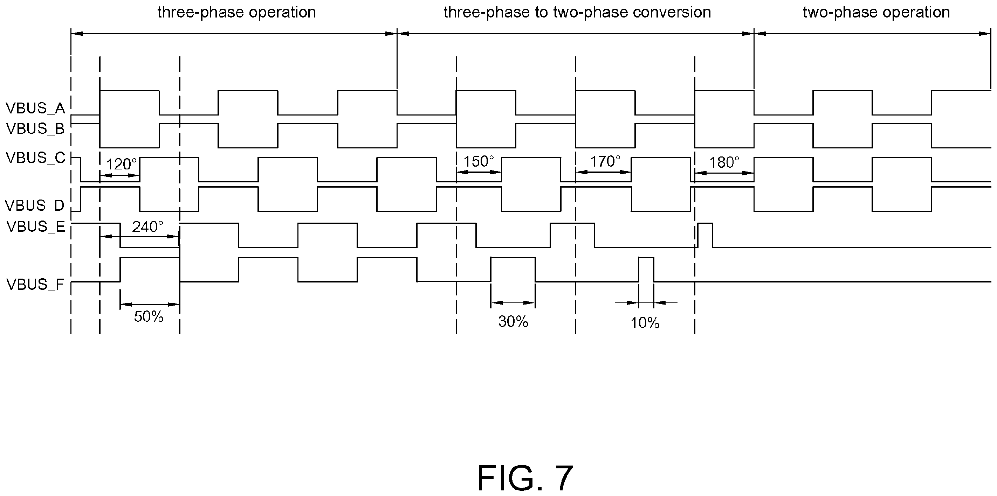

Please refer to FIG. 7, which shows a schematic waveform diagram of the three-phase resonant conversion circuit operating in three-phase converting to two-phase control according to the present disclosure. As shown in FIG. 7, it includes a three-phase operation stage, a two-phase operation stage, and a three-phase to two-phase conversion stage. In particular, the two-phase operation only controls the input switch bridge arms legA, legB, while the input switch bridge arm legC is disabled or not controlled as an example. Specifically, the three-phase operation stage of FIG. 7 may correspond to the schematic control waveform diagram of FIG. 5, that is, the three-phase control waveform before conversion, and the two-phase operation stage of FIG. 7 may correspond to the schematic control waveform diagram of FIG. 6, that is, the two-phase control waveform after conversion. However, the contents of these two stages will not be repeated here.

In particular, the three-phase to two-phase conversion stage in FIG. 7, which illustrates how to switch from three-phase operation mode to two-phase operation mode. The control signals VBUS_A, VBUS_B of the upper-arm switch and lower-arm switch of the input switch bridge arm legA maintain the variable frequency operation mode, and the control signals VBUS_C, VBUS_D of the upper switch and lower-arm switch of the input switch bridge arm legB gradually increase from the original lagging 120 degree phase to the 180 degree phase. This process can be called a smooth conversion period (transition) or a soft conversion period (transition). At the same time, the duty cycles of the control signals VBUS_E, VBUS_F of the upper-arm switch and the lower-arm switch of the input switch bridge arm legC gradually changes from the original 50% to 0% during the smooth conversion period (soft conversion period). When the smooth conversion period (soft conversion period) is over, the three-phase operation mode completely converts to the two-phase operation mode can achieve. Therefore, if the output of a sufficient wattage is not required, two-phase operation mode can be used, that is, when three-phase operation mode is used, it can be converted to two-phase operation mode, and the output of so much energy may not be required. On the contrary, if more power is required, the two-phase operation mode is converted into the three-phase operation mode, thereby maintaining the normal operation of the resonant conversion circuit under the corresponding power requirement.

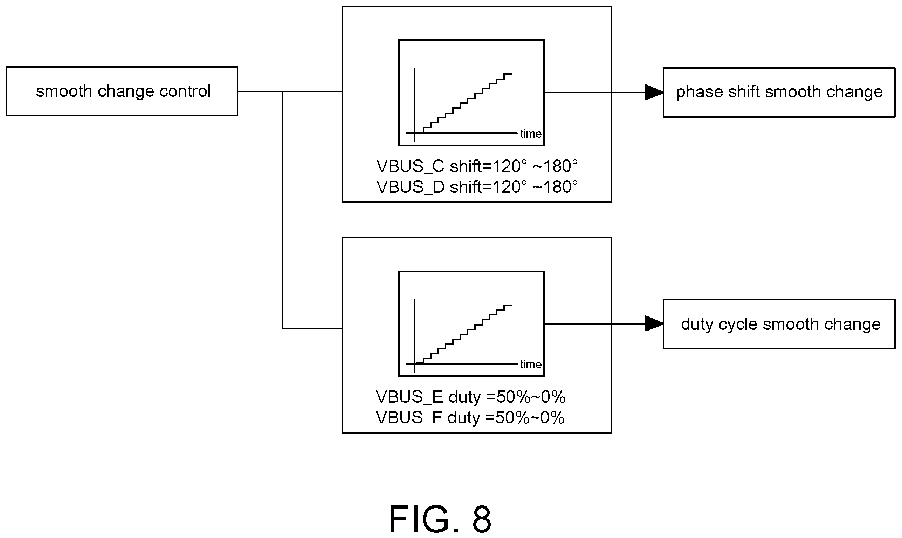

Please refer to FIG. 8, which shows a schematic diagram of smooth conversions in phase shift and duty cycle according to the present disclosure. FIG. 8 is a diagram corresponding to FIG. 7 showing the smooth (soft) change control from three-phase operation to two-phase operation during the smooth conversion, i.e., the smooth conversion start control mechanism, which includes a smooth (soft) change of phase shift and a smooth (soft) change of duty cycle. As mentioned above, the control signals VBUS_A, VBUS_B of the upper-arm switch and the lower-arm switch of the input switch bridge arm legA maintain the variable frequency operation mode, and the control signals VBUS_C, VBUS_D of the upper-arm switch and the lower-arm switch of the input switch bridge arm legB gradually increase from the original lagging phase of 120 degrees to the phase of 180 degrees (i.e., the phase shift changes smoothly), and the phases of the control signals VBUS_C, VBUS_D can be gradually increased in a step-by-step manner over time. At the same time, the duty cycle of the control signals VBUS_E, VBUS_F of the upper-arm switch and the lower-arm switch of the input switch bridge arm legC gradually changes from the original 50% to 0% (i.e., the duty cycle changes smoothly), and the duty cycles of the control signals VBUS_E, VBUS_F can be gradually reduced in a step-by-step manner over time.

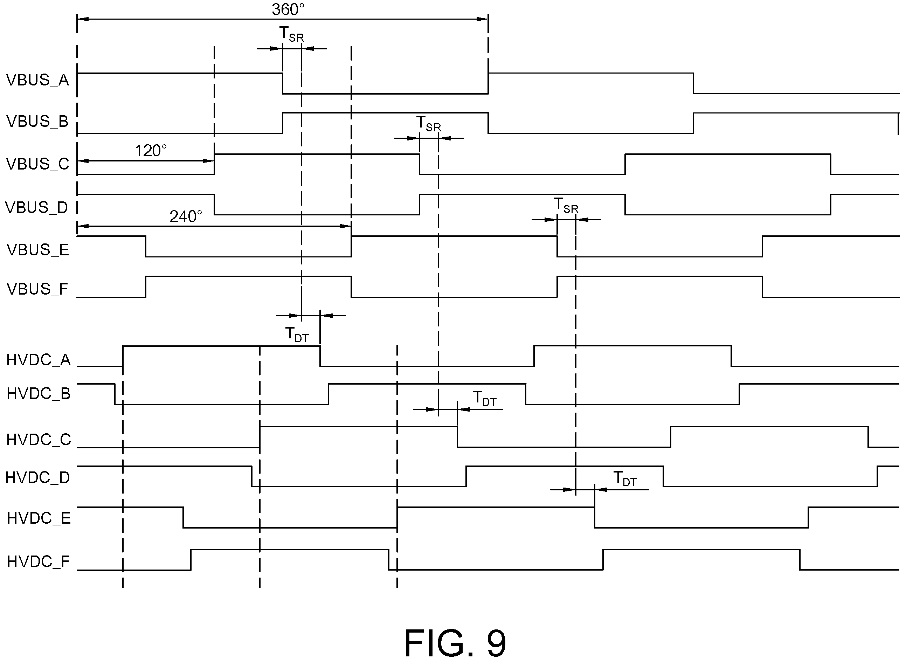

Please refer to FIG. 9, which shows a schematic waveform diagram of the three-phase resonant conversion circuit operating in delay control on synchronous rectification side according to the present disclosure. The delay control on the synchronous rectification side includes the phase shift of the synchronous rectification, represented by T_{SR}, and the delay of the phase shift modulation, represented by T_{DT}. As shown in FIG. 9, the three-phase loop control method, the controller at the minimum frequency, fixed frequency and duty cycle to perform phase shift on the synchronous rectification side, and keep the phase shifts on the synchronous rectification side at 120 degrees to increase the voltage conversion ratio. Therefore, the convenience of adjusting parameters can be achieved by only determining the minimum frequency and limiting the maximum amount of phase shift.

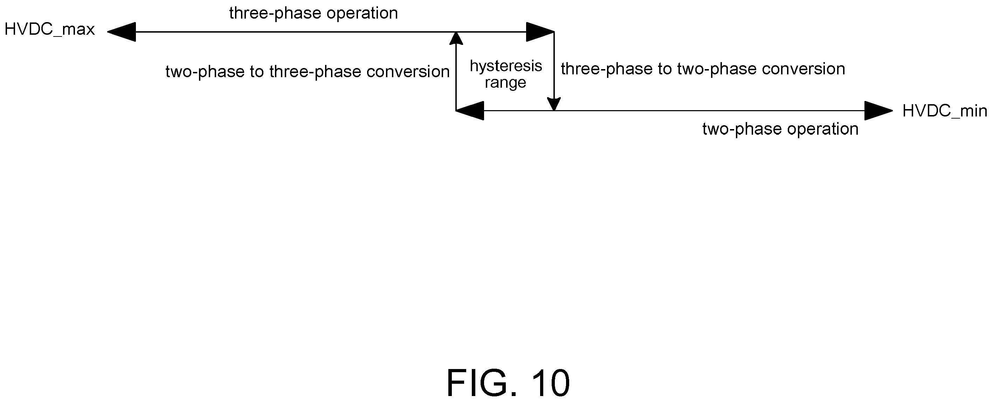

Please refer to FIG. 10, which shows a schematic diagram of the condition points for converting between three-phase operation and two-phase operation of the three-phase resonant conversion circuit according to the present disclosure. As shown in FIG. 10, at the maximum output voltage maximum HVDC_max, it belongs to the three-phase operation mode. When the output voltage HVDC is less than a first output voltage setting point HVDC_sp1 and the output power Po is less than a first output power setting point Po_sp1, a smooth (soft) conversion mechanism of converting three-phase into two-phase is performed. On the contrary, at the minimum output voltage HVDC_min, it belongs to the two-phase operation mode. When the output voltage HVDC is greater than a second output voltage setting point HVDC_sp2 and the output power Po is greater than a second output power setting point Po_sp2, a smooth (soft) conversion mechanism of converting two-phase into three-phase is performed. In particular, the middle hysteresis range is the normal operating range for both the three-phase operation mode and the two-phase operation mode. On the one hand, it can reduce the frequent conversion between three-phase operation and two-phase operation, and on the other hand, it can allow more margin for design of subsequent conversions.

As will become apparent to the skilled person when studying the above disclosure, the subject-matter of the appended claims can also be combined in a different manner as specifically claimed. In particular the term "the hybrid mode control method according to claim 1" and similar shall be deemed to encompass also the meaning "the hybrid mode control method according to any of the preceding (antecedent) claims".

In summary, the present disclosure has the following features and advantages. The hybrid mode control method proposed by the present disclosure is used for a three-phase resonant conversion circuit under a wide range of voltage operation. If the output of a sufficient wattage is not required, two-phase operation mode can be used. On the contrary, if more power is required, the two-phase operation mode is converted into the three-phase operation mode, thereby maintaining the normal operation of the resonant conversion circuit under the corresponding power requirement.

## Claims

1. A hybrid mode control method for controlling a three-phase resonant conversion circuit, wherein the three-phase resonant conversion circuit comprises three resonant tanks with electrical isolation, the three resonant tanks respectively connected to three input switch bridge arms (legA, legB, legC) and three output switch bridge arms, **characterized in that** the hybrid mode control method comprising steps of:
converting a two-phase burst mode of the three-phase resonant conversion circuit into a first PFM (pulse frequency modulation) mode as loading of the three-phase resonant conversion circuit increases when an output voltage of the three-phase resonant conversion circuit is less than an output voltage boundary (HVDC_boundary) and an output power of the three-phase resonant conversion circuit is less than a first output power boundary (Po_boundary1), wherein the first PFM mode controls any two resonant tanks and two corresponding input switch bridge arms (legA, legB, legC) and two corresponding output switch bridge arms,
converting the first PFM mode into a second PFM mode as the loading continuously increases when the output power is greater than the first output power boundary (Po_boundary1), wherein the second PFM mode is to control the three resonant tanks and the three corresponding input switch bridge arms (legA, legB, legC) and the three corresponding output switch bridge arms,
converting the two-phase burst mode into the first PFM mode as the loading increases when the output voltage is greater than the output voltage boundary (HVDC_boundary) and the output power is less than a second output power boundary (Po_boundary2), wherein the first output power boundary (Po_boundary1) is greater than the second output power boundary (Po_boundary2), and
converting the first PFM mode into the second PFM mode as the loading continuously increases when the output power is greater than the second output power boundary (Po boundary2).

2. The hybrid mode control method as claimed in claim 1, further comprising:
converting the second PFM mode into a PSM (phase shift modulation) mode as the loading continuously increases when the output voltage is greater than the output voltage boundary (HVDC_boundary) and the output power is greater than the first output power boundary (Po_boundary1).

3. The hybrid mode control method as claimed in claim 1, further comprising:
maintaining the first PFM mode as the output voltage increases from below the output voltage boundary (HVDC_boundary) to above the output voltage boundary (HVDC_boundary) when the output power is less than the second output power boundary (Po_boundary2) and greater than a minimum output power (Po_min).

4. The hybrid mode control method as claimed in claim 1, further comprising:
converting the first PFM mode into the second PFM mode as the output voltage increases from below the output voltage boundary (HVDC_boundary) to above the output voltage boundary (HVDC_boundary) when the output power is less than the first output power boundary (Po_boundary1) and greater than the second output power boundary (Po_boundary2).

5. The hybrid mode control method as claimed in claim 1, further comprising:
converting the second PFM mode into a PSM mode as the output voltage increases from below the output voltage boundary (HVDC_boundary) to above the output voltage boundary (HVDC_boundary) when the output power is greater than the first output power boundary (Po_boundary1) and less than a maximum output power (Po_max).

6. The hybrid mode control method as claimed in claim 1, further comprising:
maintaining the two-phase burst mode when the output power is less than a minimum output power (Po_min).

7. The hybrid mode control method as claimed in claim 1, wherein converting three-phase into two-phase comprises steps of:
disabling any one of the three input switch bridge arms (legA, legB, legC) and setting duty cycles of switches of the disabled input switch bridge arm (legA, legB, legC) to zero,
setting duty cycles of switches of one of the remaining two input switch bridge arms (legA, legB, legC) to be fixed, and
setting phase shifts of switches of the other of the remaining two input switch bridge arms (legA, legB, legC) from 120 degrees to 180 degrees.

8. The hybrid mode control method as claimed in claim 7, further comprising steps of:
disabling any one of the three input switch bridge arms (legA, legB, legC) and setting duty cycles of switches of the disabled input switch bridge arm (legA, legB, legC) to zero in a step-by-step manner, and
setting phase shifts of switches of the other of the remaining two input switch bridge arms (legA, legB, legC) from 120 degrees to 180 degrees in a step-by-step manner.

9. The hybrid mode control method as claimed in claim 1, wherein converting two-phase into three-phase comprising steps of:
enabling an input switch bridge arm (legA, legB, legC) which was originally disabled and increasing duty cycles of switches of the enabled input switch bridge arm (legA, legB, legC) from zero to an operable value,
setting duty cycles of switches of one of the remaining two input switch bridge arms (legA, legB, legC) to be fixed, and
setting phase shifts of switches of the other of the remaining two input switch bridge arms (legA, legB, legC) from 180 degrees to 120 degrees.

10. The hybrid mode control method as claimed in claim 9, further comprising steps of:
enabling an input switch bridge arm (legA, legB, legC) which was originally disabled and increasing duty cycles of switches of the enabled input switch bridge arm (legA, legB, legC) from zero to an operable value in a step-by-step manner, and
setting phase shifts of switches of the other of the remaining two input switch bridge arms (legA, legB, legC) from 180 degrees to 120 degrees in a step-by-step manner.

11. The hybrid mode control method as claimed in claim 1, wherein in the first PFM mode or in the second PFM mode, a duty cycle is fixed at 50%, and a frequency is variable between a maximum frequency and a minimum frequency.

12. The hybrid mode control method as claimed in claim 2, wherein in the PSM mode, a duty cycle is fixed at 50%, a frequency is fixed at a minimum frequency, and a phase shift is variable between 0% and a maximum value.

13. The hybrid mode control method as claimed in claim 1, wherein in the two-phase burst mode, a duty cycle is fixed at 50%, and a frequency is fixed at the maximum frequency.
